Europäisches Patentamt

European Patent Office

Office européen des brevets

(19)

(11) Publication number: **0 188 398**
**A2**

(12)

# EUROPEAN PATENT APPLICATION

(21) Application number: **86400078.1**

(22) Date of filing: **15.01.86**

(51) Int. Cl.⁴: **A 23 L 1/10**

(30) Priority: **18.01.85 US 692566**

(43) Date of publication of application:
**23.07.86 Bulletin 86/30**

(84) Designated Contracting States:
**AT BE CH DE FR GB IT LI LU NL SE**

(71) Applicant: **NABISCO BRANDS INC.**
**Nabisco Brands Plaza**
**Parsippany New Jersey 07054(US)**

(72) Inventor: **Straka, Robert**
**2 Reynolds Road**
**Pequannock New Jersey 07440(US)**

(72) Inventor: **Calandro, Thomas P.**
**388 Delaware Avenue**
**Paterson New Jersey 07410(US)**

(74) Representative: **Bonnetat, Christian et al,**
**Cabinet PROPI Conseils 23 rue de Léningrad**
**F-75008 Paris(FR)**

(54) Extruded sweet snack.

(57) An extruded food product having enhanced retention of volatile liquid flavorants. The extruded food product includes a food ingredient composed of a particulate carrier in meal form, and a flavorant absorbed in the particulate carrier. The flavorant is a liquid flavorant which is readily volatile between about 180° and about 230°F. The volatile liquid flavorant is present in an amount of between about 125 weight percent and about 0.1 weight percent, based on the weight of the particulate carrier. The extruded food product also contains a particulate base material which is less hard than the particulate carrier. About 1 to about 5 weight percent, based on the weight of the extruded food product, of the food ingredient is present in the extruded food product.

0188398

## EXTRUDED SWEET SNACK

The invention relates to a process for preparing flavored snack food products. The invention also relates to the flavored snack food products produced by such process.

In the production of cereal-based sweet snacks, which contain volatile liquid flavorings, such as, raspberry and orange, by an extrusion process, the volatile flavorings boil off or decompose to a great extent during the cooking and baking process. The extruded snack is made mostly from wheat flour and/or other grain flours.

U.S. Patent No. 3,348,950 teaches preparing a fried dough snack product from corn grits. A flavor developing ingredient (i.e., at least one of five specific inorganic salts) is dissolved in water, the solution is mixed with the corn and the corn and solution are allowed to stand prior to cooking. The organic salt is not a flavoring, but is a flavor developing agent. A solution of sugar and salt is added to the steeped aqueous mixture of inorganic salt and corn. The principle taught by the patent is the

0188398

steeping of an inorganic salt and corn grits in water (prior to flavor addition) and then the cooking of the admixture of the inorganic salt, corn and water in order to obtain good absorption of the inorganic salt into the corn grits. The patent cooks the treated corn composition, but does not specify in a cooker extruder. The patent adds the flavor developing agent to accelerate and control the browning reactions during the drying step. The patent fries its pieces after cooking, drying and tampering.

An object of the invention is to provide a food product which has better flavor retention. Such food product is categorized as a "snack". A further object of the invention is to provide a process for preparing such food product. A still further object of the invention is to provide a food ingredient, which is a volatile flavorant and a carrier therefor, for use in such food product. Another object of the invention is to provide a process for preparing such food ingredient. Other objects and advantages of the invention are set out herein or obvious herefrom to those skilled in the art.

The advantages and objects of the invention are achieved by the processes, food product and food ingredient of the invention.

The invention involves a food ingredient which is composed of a particulate carrier having a flavorant absorbed therein. The flavorant is a liquid flavorant which is volatile at a temperature between about 180° and about 230°F. The food ingredient includes the particulate carrier in meal form which is harder than a particulate starch cereal material. The volatile liquid flavorant is absorbed in the particulate carrier in an amount of between about 125 weight percent and about 0.1 weight percent, based on the weight of the particulate carrier.

The volatile liquid flavorant is preferably readily vaporizable between about 180° and 200°F. Preferably the volatile liquid flavorant is an artificial volatile liquid flavorant. Also, preferably the volatile liquid flavorant is a volatile liquid raspberry flavorant. The particulate carrier is preferably a proteinaceous cereal meal which is harder than a starch cereal meal, and preferably the particulate carrier is corn meal or rice meal. Preferably the weight ratio of the particulate carrier to the volatile liquid flavorant is between 50 to 50 and 999 to 1. More preferably the weight ratio of

0188398

the particulate carrier to the volatile liquid flavorant is about 50 to 1.

Better flavor retention is achieved by mixing the liquid flavoring with the corn meal and/or rice meal than is achieved by pumping the liquid flavoring into the extruder without the corn meal or rice meal carrier.

The invention also involves a process for preparing the invention food ingredient. The process includes contacting the particulate carrier and the volatile liquid flavorant. The contact step lasts in duration until at least between about 0.1 and about 125 weight percent, based on the weight of the particulate carrier, of the volatile liquid flavorant, which has been absorbed in the particulate carrier.

The particulate carrier containing the absorbed volatile liquid flavorant therein is removed from any remaining volatile liquid flavorant. Preferably the particulate carrier containing the absorbed volatile liquid flavorant is dried of any extraneous surface liquid material at a temperature whereby no significant amount of the absorbed volatile liquid flavorant is driven off from the particulate carrier. Preferably the contacting step is achieved by first mixing the particulate carrier and the volatile liquid flavorant in a ribbon blender and then allowing the mixture to set for about 10 minutes.

The invention further involves an extruded food product. The extruded food product includes a food ingredient, a particulate carrier in meal form, and a flavorant absorbed in the particulate carrier. The flavorant is a liquid flavorant which is readily volatile between about 180° and about 230°F. The volatile liquid flavorant is present in an amount of between about 125 weight percent and about 0.1 weight percent, based on the particulate carrier. The extruded food product also contains a particulate base material which is less hard than the particulate carrier. About 1 to about 5 weight percent, based on the weight of the extruded food product, of the food ingredient being present in the extruded food product.

About 95 to about 99 weight percent, based on the weight of the extruded food product, of the particulate base material is preferably present in the extruded food product. Preferably the particulate base material is soft wheat flour.

The invention still further involves a process for the preparation of the invention extruded food product. The process includes mixing a food ingredient and a particulate base material. The food ingredient is a combination of a particulate carrier in meal form and a flavorant absorbed in the particulate carrier. The particulate carrier is harder than a particulate starch cereal material. The flavorant is a liquid flavorant which is readily volatile between about 180° and about 230°F. The volatile liquid flavorant is present in an amount of between about 125 weight percent to about 0.1 weight percent, based on the weight of the particulate carrier. The particulate base material is less hard than the particulate carrier. About 1 to about 5 weight percent, based on the weight of the extruded food product, of the food ingredient is present in the extruded food product. Then the mixture is extruded, whereby the extruded food product is obtained.

Preferably the mixing and extruding steps are achieved in an extruder. Also, preferably the extrudate is cooled, dried and packaged.

The invention also involves hermetically-sealed packages containing the extruded food product of the invention.

Until now, volatile liquid flavorants in extruded foods of the art type had serious problems due to the high temperature and pressures in the extruder barrel, extruder die, plus the mechanical action in the extruder barrel. There was thermal decomposition of the flavorants, reaction of the flavorants with other substances to destroy the desirable flavor characteristics and loss of the flavorants due to volatilization. The invention has reduced and minimized such problems. Since the invention absorbs the volatile liquid flavorants into the particulate carrier material, which means much less flavorant destruction, much less flavorant reaction and much less flavorant loss due to volatilization (upon exit of the food product for the extruder die).

The invention involves more than a mechanism for merely distributing the volatile liquid flavor throughout the food snack. During the extrusion step the starchy base material particles are significantly broken up by the extruder action, etc., but the comparatively harder carrier material particles are broken up to much less degree. This means that the absorbed volatile liquid flavorant is not exposed to the same degree as when the volatile liquid flavorant is not used in the form of being absorbed in the volatile liquid flavorant. When the volatile liquid flavorant is premixed with starchy wheat flour meal and then extruded as part of a food product, the wheat flour quickly lacks the flavorant after extrusion (most of the flavorant is gone after a day). When corn meal is used as the particulate carrier, the corn meal retains the absorbed flavorant after extrusion - after several days, the absorbed flavorant is still defusing into the now bland wheat flour base material. The invention extruded food product retains a high level of flavorant for six months or more after being hermetically packaged.

The special effect achieved by the particulate carrier is most likely more than a difference in particle sizes because a particulate base material has the same size as the particulate carrier that can be used. The particulate base material is usually broken in the extrusion step to a greater degree (i.e., greater increase in size reduction) than is the particulate carrier. Basically all of the particulate carrier is broken up in the extrusion step; but the particulate carrier still is present in the extruded invention food product in discrete particle form. If large-sized particulate material is used, it may not be broken up during the extrusion step but instead decompose, etc., due to the heat and pressure in the extruder. An example of this is when large potato grains are used.

An extruded sweet snack is made from wheat flour and/or other grain flours, and about 1 to 5 weight percent of flavor. Better flavor retention during extrusion cooking is achieved by mixing the liquid flavoring with corn meal and/or rice meal than is achieved by pumping the liquid flavoring into the extruder without the corn meal or rice meal. In addition, more uniformity of flavoring is obtained. For example, commercially-available liquid flavoring is mixed with the corn meal and/or rice meal, and then left to stand for about 10 minutes before being added to the main mix. Mixing prior to use of the extruder is in a ribbon blender.

There is only a small amount of liquid (liquid flavoring) which must be incorporated into a large amount of solid material. Combining the liquid flavoring with the corn meal and/or rice and then mixing the rice or corn meal with the main mix provides for a more uniform distribution of the flavoring throughout the final product.

As used herein, all parts, percentages, ratios and proportions are on a weight basis unless otherwise stated herein or otherwise herefrom to those skilled in the art.

All of the ingredients used in the invention should be food grade or edible. As used herein, the term "food" includes foods and feeds.

The volatile liquid flavorants are readily vaporizable at the temperature range of about 180° to about 230°F. which is the range of temperatures normally encountered by the extrudate upon exiting from the extruder die. Such extrudate is the invention snack food upon being cooled. The material being extruded is subjected to higher temperatures in the extruder itself. Preferably the volatile liquid flavorants are readily vaporizable at the temperature range of about 180° to 200°F.

In conjunction with the flavorants, as used herein, the term "liquid" means the flavorant is liquid at room temperature (i.e., 68°F.). To meet this criterion, the flavorant can be dissolved in a solvent whereby the flavorant solution is liquid at room temperature and is readily volatile at about 180° to 230°F.

The volatile liquid flavorant can be natural volatile liquid flavorants, but synthetic or artificial volatile liquid flavorants are somewhat preferred. Any volatile liquid flavorants can be used provided they meet the criterion therefor set out herein. The preferred volatile liquid flavorants are orange and raspberry volatile liquid flavorants. Examples of other volatile liquid flavorants are banana and vanilla (extract). The volatile liquid flavorants must be ones which will be absorbed to a significant degree by the

particulate carrier.    Commercially-available volatile liquid flavorants can be used.

Two or more volatile liquid flavorants can be used in combination.  Also, two or more sets of particulate carriers containing different volatile liquid flavorants in the extruded food products of the invention.

The particulate material used in the volatile liquid flavorant mix should be a meal, which has a particle size distribution wherein no more than 3 weight percent of the particles are left on a U.S. Sieve Series Screen No. 20, no more than 5 weight percent of the particles pass through a U.S. Sieve Series Screen No. 60, and the remainder of the particles have a particle size between the two mentioned screen sizes.  The particulate material is preferably a meal having the following particle size distribution:

| Screen Size | Particle Range |
|---|---|
| On U.S. 20 | 0 to 3 percent |
| On U.S. 30 | 20 to 40 percent |
| On U.S. 40 | 50 to 70 percent |
| On U.S. 60 | 5 to 20 percent |
| Through U.S. 60 | 1 to 5 percent |

All of the screen sizes are U.S. Sieve Series.

The volatile liquid flavorant is primarily absorbed by the particulate carrier material, although some of the volatile liquid flavorant may be absorbed on the carrier material.

The particulate carrier can be any edible substance that will absorb the volatile liquid flavorant and that will suffer significantly less break up (i.e., decrease in particulate size) than the particulate base material during the extrusion step. The most preferred particulate carrier is corn meal because of its hard vitreous corn structure. Rice meal is a preferred particulate carrier. The particulate carrier can be a vitreous hard wheat meal (as opposed to a soft wheat meal or flour). Examples of other useful particulate carriers are soy grits and oat groats.

The weight ratio of the particulate carrier to the volatile liquid flavorant is normally between 50 to 50 and 999 to 1. The lower value represents a value of 0.1 weight percent of the volatile liquid carrier in the invention food ingredient. The lower level depends upon the type of flavorant used; for example, the lower level could be 0.001 weight percent if a volatile liquid garlic flavorant is used. Most preferably the weight ratio of corn meal to volatile liquid flavorant is 5 grams to 0.1 gram, respectively mixed with the particu-

late carrier, preferably using a ribbon blender. Then the mixture is allowed to set, normally for about 10 minutes, until the volatile liquid flavorant is absorbed as much as reasonably possible into the particulate carrier.

Usually about 1 to 5 weight percent, based on the weight of the invention food product, of the invention food ingredient is used in the food product. The invention food ingredient is added to the particulate base carrier and then mixed until a homogeneous mixture is obtained. Preferably the mixing is done in a ribbon blender. The homogeneous mixture is extruded.

The particulate base material can be any edible substance that will suffer significantly more break up than the particulate carrier material during the extrusion step. The most preferred particulate base material is a soft wheat flour. The particulate base material can be any type of particulated starch material, but preferably it is a particulated starch cereal material. Examples of useful particulate base material are rye flour, oat flour, barley flour, potato flour, and rice flour.

The particulate base material preferaby is a flour, which has a smaller particle size than a meal. Any particle size or range for the particulate base material can be used provided it is operable with the scope of the invention - one skilled in the art can readily ascertain if a particular size or range is suitable.

Other edible particulate material, such as, skim milk powder, sugar and salt, can be included in the material to be extruded. Normally up to 25 weight percent of such other edible particulate materials can be used (based on the weight of the invention food product). A liquid material should not be used as it may tend to prematurely leach the absorbed volatile liquid flavorant out of the particulate carrier.

Any suitable extruder can be used to prepare the extruded invention food product, but a Creusot-Loire twin screw extruder is preferred.

The invention food product can be extruded into any desired shape. The extrudate is cooled and preferably dried. If desired, the extruded invention food product can be sugar coated with a high temperature sugar solution and further dried.

If the invention food product is hermetically sealed in packages, the packaged invention food product has a shelf life of six months or more.

15

## EXAMPLE 1

A raspberry flavorant mix was prepared by mixing 2 pounds of white corn meal and 20 grams of volatile liquid raspberry flavorant (i.e., raspberry flavor no. 2211, from Fraterom Corporation), and then allowing the admixture to set for 10 minutes. 2.2 weight percent, based on the weight of the white corn meal, of the volatile liquid raspberry flavorant was used. The admixing was done in a ribbon blender until homogeneity was obtained.

The raspberry flavorant mix was admixed with 67 pounds 8 ounces of wheat flour, 7 pounds 8 ounces of wheat germ flour, 2 pounds of skim milk powder and sufficient water for processing in an extruder. About 2.7 weight percent, based on the weight of the other solid ingredients, of the raspberry flavorant mix was used. The admixing was done in a ribbon blender until a homogeneous mixture (paste) was achieved. The paste was extruded using a Creusot-Loire twin screw extruder through a ring die. The ring die had a length of 5/16 inch and a diameter of 7/16 inch - the center pin had a diameter of 1/8 inch. The extrudate had a temperature of about 190°F. as it left the die.   The extrudate was cut into 1/8 inch segments immediately as it exited the die.   Upon cooling of the extrudate sections, raspberry flavored ring snacks were obtained which, upon being hermetically packaged, retained their flavor at a substantial level for at least six months and were shelf stable.

## EXAMPLE 2

A raspberry flavor mix was prepared by mixing 5 parts of yellow corn meal and 0.1 part of volatile liquid raspberry flavorant (i.e., raspberry flavor no. 2211), and then allowing the admixture to set for 10 minutes.   The volatile liquid raspberry flavorant was completely absorbed by the yellow corn meal.   2 weight percent, based on the weight of the yellow corn meal, of the volatile liquid raspberry flavorant was used.   The admixing was done in a ribbon blender until homogeneity was obtained.   The yellow corn meal had the following particle distribution:

| Screen Size [1] | Particle Size |
|-----------------|---------------|
| On U.S. 20      | 1 percent     |
| On U.S. 30      | 30 percent    |

On U.S. 40      57 percent

On U.S. 60      10 percent

Through U.S. 60      2 percent

Note:

1. All of the screen sizes are U.S. Sieve Series.

The raspberry flavoring mix was admixed with 100 parts of wheat flour, 11 parts of wheat germ flour, 3 parts of skim milk powder and sufficient water for processing in an extruder. About 4.5 weight percent, based on the weight of the other solid ingredients, of the raspberry flavoring mix was used. The admixing was done in a ribbon blender until a homogeneous mixture (paste) was achieved. The paste was extruded using a Creusot-Loire twin screw extruder through a ring die. The ring die had a length of 5/16 inch and a diameter of 1/8 inch. The extrudate had a temperature of about 190°F. as it left the die. The extrudate was cut into 1/8 inch segments immediately as it exited the die. Upon cooling of the extrudate sections, raspberry flavored ring snacks were obtained, which upon being hermetically packaged, retained their flavor at a substantial level for at least six months and were shelf stable.

## EXAMPLE 3

Example 2 was repeated, except that rice meal was used in place of the yellow corn meal.

## EXAMPLE 4

An orange flavorant mix was prepared by mixing 2 pounds 8 ounces of white corn meal and 40 grams of volatile liquid orange flavorant (i.e., orange flavor no. 400731, from Universal Flavors Corporation), and then allowing the admixture to set for 10 minutes. The volatile orange flavorant was completely absorbed by the white corn meal. 3.6 weight percent, based on the weight of the white corn meal, of the volatile liquid orange flavorant was used. The admixing was done in a ribbon blender until homogeneity was obtained.

The orange flavorant mix was admixed with 75 pounds of wheat flour and sufficient water for processing in an extruder. About 3.5 weight percent, based on the weight of the other solid ingredients, of the orange flavorant mix was used. The admixing was done in a ribbon blender until a homogeneous mixture (paste) was achieved. The paste was extruded using a Creusot-Loire two screw

19

extruder through a ring die. The ring die had a length of 5/16 inch and a diameter of 1/8 inch. The extrudate had a temperature of about 190°F. as it left the die. The extrudate was cut into 1/8 inch segments immediately as it exited the die. Upon cooling of the extrudate sections, orange flavored ring snacks were obtained, which upon being hermetically packaged, retained their flavor at a substantial level for at least six months and were shelf stable.

### EXAMPLE 5

Example 4 was repeated, except that rice meal was used in place of the white corn meal.

### EXAMPLE 6

Example 4 was repeated, except that a die having a slit therein was used in place of the ring die.

### EXAMPLE 7

Example 4 was repeated, except that a die having a circular hole therein was used in place of the ring die.

## EXAMPLE 8

An orange flavorant mix was prepared by mixing 2 pounds 8 ounces of white corn meal and 40 grams of volatile liquid orange flavorant (i.e., orange flavor no. U.S. 60959, from H&R Corporation), and then allowing the admixture to set for 10 minutes. The volatile orange flavorant was completely absorbed by the white corn meal. 3.6 weight percent, based on the weight of the white corn meal, of the volatile liquid orange flavorant was used. The admixing was done in a ribbon blender until homogeneity was obtained.

The orange flavorant mix was admixed with 75 pounds of wheat flour and sufficient water for processing in an extruder. About 3.5 weight percent, based on the weight of the other solid ingredients, of the orange flavorant mix was used. The admixing was done in a ribbon blender until a homogeneous mixture (paste) was achieved. The paste was extruded using a Creusot-Loire twin screw extruder through a ring die. The ring die had a length of 5/16 inch and a diameter of 7/16 inch - the center pin had a diameter of 1/8 inch. The extrudate had a temperature of about 190°F. as it left the die. The extrudate was cut into 1/8 inch segments immediately as it exited the die. Upon cooling of the extrudate sections, orange flavored ring snacks were obtained, which upon being hermetically packaged, retained their flavor at a substantial level for at least six months and were shelf stable.

EXAMPLE 9

Example 8 was repeated, except that rice meal was used in place of the white corn meal.

EXAMPLE 10

Example 8 was repeated, except that die having a slit therein was used in place of the ring die.

EXAMPLE 11

Example 8 was repeated, except that a die having a circular hole therein was used in place of the ring die.

By way of summary, the invention involves a process of preparing extruded sweet snacks having the flavoring uniformly distributed therein. The extruded sweet snacks are made from wheat flour and/or other grain flours plus about 1 to 5 percent of flavor. Better flavor retention during extrusion cooking is achieved by mixing the liquid flavoring with corn meal and/or rice than is achieved by pumping the liquid flavoring into the extruder without the corn meal or rice meal. The commercially available liquid flavoring is mixed with the corn meal and/or rice, and then left to stand for about 10 minutes before being added to the main mix. Mixing in a ribbon blender is done prior to treatment in the extruder. The usual problem of the volatilization and decomposition of volatile flavorings during the subsequent cooking and/or baking is apparently avoided by the invention process.

WHAT IS CLAIMED IS:

1. Food ingredient comprising:

(a) a particulate carrier in meal form, the particulate carrier being harder than a particulate starch cereal material; and

(b) a flavorant absorbed in the particulate carrier, the flavorant being a liquid flavorant which is readily volatile between about 180° and about 230°F, the volatile liquid flavorant being present in an amount of between about 125 weight percent to about 0.1 weight percent, based on the weight of the particulate carrier.

2. Food ingredient as claimed in Claim 1 wherein the volatile liquid flavorant is readily vaporizable between about 180° and about 200°F.

3. Food ingredient as claimed in Claim 1 wherein the volatile liquid flavorant is an artificial volatile liquid flavorant.

4. Food ingredient as claimed in Claim 1 wherein the volatile liquid flavorant is a volatile liquid raspberry flavorant.

5. Food ingredient as claimed in Claim 1 wherein the particulate carrier is a proteinaceous cereal meal which is harder than a starch cereal meal.

6. Food ingredient as claimed in Claim 1 wherein the particulate carrier is corn meal or rice meal.

7. Food ingredient as claimed in Claim 1 wherein the weight ratio of the particulate carrier to the volatile liquid flavorant is between 50 to 50 and 999 to 1.

8. Food ingredient as claimed in Claim 1 wherein the weight ratio of the particulate carrier to the volatile liquid flavorant is about 50 to 1.

9. Process for preparing the food ingredient of Claim 1, comprising contacting the particulate carrier and the volatile liquid flavorant, the contact lasting in duration until at least between about 0.1 and about 125 weight percent, based on the weight of the particulate carrier, of the volatile liquid flavorant, which has been absorbed in particulate carrier.

10. Process as claimed in Claim 9 wherein the particulate carrier containing the absorbed volatile liquid flavorant therein is removed from any remaining volatile liquid flavorant.

11. Process as claimed in Claim 9 wherein the particulate carrier containing the absorbed volatile liquid flavorant is dried of any extraneous surface liquid material at a temperature whereby no significant amount of the absorbed volatile liquid flavorant is driven off from the particulate carrier.

12. Process as claimed in Claim 9 wherein the contacting step is achieved by first mixing the particulate carrier and the volatile liquid flavorant in a ribbon blender and then allowing the mixture to set for about 10 minutes.

13. Process as claimed in Claim 9 wherein the volatile liquid flavorant is readily vaporizable between about 180° and about 200°F.

14. Process as claimed in Claim 9 wherein the volatile liquid flavorant is an artificial volatile liquid flavorant.

15. Process as claimed in Claim 9 wherein the volatile liquid flavorant is a volatile liquid raspberry flavorant.

16. Proess as claimed in Claim 9 wherein the particulate carrier is a proteinaceous cereal meal which is harder than a starch cereal meal.

17. Process as claimed in Claim 9 wherein the particulate carrier is corn meal or rice meal.

18. Process as claimed in Claim 9 wherein the weight ratio of the particulate carrier to the volatile liquid flavorant is between 50 to 50 and 999 to 1.

19. Process as claimed in Claim 9 wherein the weight ratio of the particulate carrier to the volatile liquid flavorant is about 50 to 1.

20. Extruded food product comprising, in combination:

(a) a food ingredient comprising:

(i) a particulate carrier in meal form; and

(ii) a flavorant absorbed in the particulate carrier, the flavorant being a liquid flavorant which is readily volatile between about 180° and about 230°F., the volatile liquid flavorant being present in an amount of between about 125 weight percent and about 0.1 weight percent, based on the weight of the particulate carrier; and

(b) a particulate base material, the particulate base material being less hard than the particulate carrier,

about 1 to about 5 weight percent, based on the weight of the extruded food product, of the food ingredient being present in the extruded food product.

21. The extruded food product as claimed in Claim 20 wherein about 95 to about 99 weight percent, based on the weight of the extruded food product, of the particulate base material is present in the extruded food product.

22. The extruded food product as claimed in Claim 20 wherein the particulate base material is soft wheat flour.

23. The extruded food product as claimed in Claim 20 wherein the volatile liquid flavorant is readily vaporizable between about 180° and about 200°F.

24. The extruded food product as claimed in Claim 20 wherein the volatile liquid flavorant is an artificial volatile liquid flavorant.

25. The extruded food product as claimed in Claim 20 wherein the volatile liquid flavorant is a volatile liquid raspberry flavorant.

26. The extruded food product as claimed in Claim 20 wherein the particulate carrier is a proteinaceous cereal meal which is harder than a starch cereal meal.

27. The extruded food product as claimed in Claim 20 wherein the particulate carrier is corn meal or rice meal.

28. The extruded food product as claimed in Claim 20 wherein the weight ratio of the particulate carrier to the volatile liquid flavorant is between 50 to 50 and 999 to 1.

29. The extruded food product as claimed in Claim 20 wherein the weight ratio of the particulate carrier to the volatile liquid flavorant is about 50 to 1.

30. Process for preparing the extruded food product of Claim 9, comprising:

(A)  mixing the following:

(a)  a food ingredient comprising:

(i) a particulate carrier in meal form; and

(ii) a flavorant absorbed in the particulate carrier, the flavorant being a liquid flavorant which is readily volatile between about 180° and about 230°F., the volatile liquid flavorant being present in an amount of between about 0.1 and about 125 weight percent, based on the weight of the particulate carrier; and

(b)  a particulate base material, the particulate base material being less hard than the particulate carrier,

about 1 to about 5 weight percent, based on the weight of the extruded food product, of of the food ingredient being present in the extruded food product.

(B)  extruding mixture (a), whereby said extruded food product is obtained.

31.  The process as claimed in Claim 30 wherein steps (a) and (b) are achieved in an extruder.

32.  The process as claimed in Claim 30 wherein the extrudate of step (b) is cooled and packaged.

33.  The process as claimed in Claim 30 wherein the volatile liquid flavorant is readily vaporizable between about 180° and about 200°F.

34. The process as claimed in Claim 30 wherein the volatile liquid flavorant is an artificial volatile liquid flavorant.

35. The process as claimed in Claim 30 wherein the volatile liquid flavorant is a volatile liquid raspberry flavorant.

36. The process as claimed in Claim 30 wherein the particulate carrier is a proteinaceous cereal meal which is harder than a starch cereal meal.

37. The process as claimed in Claim 30 wherein the particulate carrier is corn meal or rice meal.

38. The process as claimed in Claim 30 wherein the weight ratio of the particulate carrier to the volatile liquid flavorant is between 50 to 50 and 999 to 1.

39. The process as claimed in Claim 30 wherein the weight ratio of the particulate carrier to the volatile liquid flavorant is about 50 to 1.

40. Hermetically-sealed packages containing the extruded food product of Claim 20.